# EUROPEAN PATENT APPLICATION

(11) **EP 1 256 376 A1**
(43) Date of publication of application: **13.11.2002**
(21) Application number: 01201738.0
(22) Date of filing: 11.05.2001
(51) Int. Cl.: B01J 19/00, B01J 8/00, B01J 8/02

(54) **Treatment vessel comprising a conditioning element and use thereof**

(71) Applicant: Avantium International B.V., 1014 BV Amsterdam (NL)
(72) Inventor: Bracht, Maarten, 1019 XD Amsterdam (NL)
(74) Representative: Bakkum, Ruben Joseph

(57) **Abstract**

The present invention relates to a treatment vessel (1) comprising an inlet (2) and outlet (3), a treatment zone (4) between the inlet (2) and the outlet (3), and a liquid conditioning zone (5) between the inlet (2) and the treatment zone (4), wherein the liquid conditioning zone (5) comprises a conditioning element (6) for conditioning the liquid to a selected temperature, and wherein the conditioning element (6) can retain substantially all unconditioned liquid fed to the conditioning zone (5) until conditioned, while conditioned liquid is allowed to pass.

## Description

The present invention relates to a treatment vessel.

In practice many different treatment vessels, including reaction vessels, are known. Treatment vessels may be used for performing chemical and/or physical reactions in a treatment zone in said vessels. To that end reagents can be fed into the vessel to react in said treatment zone to form one or more reaction products. The reagents fed to the treatment zone may be liquids, gases, vapours or a mixture thereof.

Often the reagents typically need to be heated to a certain temperature, e.g. for a reaction to occur. Frequently they are heated to their boiling point or even above said temperature when they are to be evaporated.

A problem which often occurs when using the known treatment vessels is that when a liquid is to be fed to a heated treatment zone, said liquid can be swept into the treatment zone too quickly and flash boil. If a gas is also fed to the treatment zone said liquid can be entrained by the gas aggravating said problem even further. Also, due to surface tension effects, droplets may be formed that are difficult to heat and also lead to a fluctuating feed. This impairs controlling of the treatment zone, resulting in undesired variations in pressure, temperature, concentration of reagents, etc. Also this impaired control of the treatment zone may lead to unwanted by-products in a reaction.

Therefore it would be desirable to be able to heat liquid feeds, which may be part of a gas-liquid stream, gradually for smooth evaporation or suitable heating to occur before entering the treatment zone, instead of being fed too quickly or being entrained by the gas stream into the treatment zone, while still having a too low temperature.

The above problem is particularly pertinent in the case of relatively small treatment vessels, as is the case in high throughput experimentation equipment. In these treatment vessels relatively small amounts of reagents are fed in a relatively small treatment zone, and consequently relatively minor temperature and /or evaporation rate changes will have influence on partial pressures in the treatment zone which impair the reaction performance and results obtained.

It is an object of the present invention to avoid the above problem and to provide means for ensuring that liquid feeds are heated gradually for smooth evaporation or conditioning to a desired temperature and that liquid flow through the treatment vessel can be easily controlled.

It is a further object of the present invention to provide alternative treatment vessels.

The above objects are achieved by a treatment vessel according to the present invention, comprising an inlet and outlet, a treatment zone between the inlet and the outlet, and a liquid conditioning zone between the inlet and the treatment zone, wherein the liquid conditioning zone comprises a conditioning element for conditioning the liquid to a selected temperature, and wherein the conditioning element can retain substantially all unconditioned liquid fed to the conditioning zone until conditioned, while conditioned liquid is allowed to pass.

The treatment vessel according to the present invention surprisingly provides for a gradually conditioning of a liquid feed to a preselected temperature in a surprisingly easy and reproducible manner, while it is prevented that the liquid feed is entrained in a gas flow, if present, or swept into the treatment zone too quickly. Herewith an excellent control of the conditions in the treatment zone is achieved.

According to the present invention, with "treatment zone" any zone (e.g. a reaction zone having a catalyst bed) in the treatment vessel is meant which involves treatment of the liquid resulting in e.g. a chemical and/or physical change of matter.

The reaction vessel according to the invention is not specifically limited, but in practice will be of tubular shape, e.g. glass-, stainless steel or quartz tubes.

The person skilled in the art will understand that the conditioning zone according to the present invention may comprise any conditioning element as long as it provides for the retention of substantially all unconditioned liquid fed to the conditioning zone until conditioned, while conditioned liquid and optionally present gases are allowed to pass.

In most cases, conditioning of the liquid will result in evaporation of the liquid, i.e. the vapour pressure will be at least equilibrated with the gas pressure.

Herewith a controlled evaporation of the liquid is obtained. In this respect it is noted that, if evaporation of the liquid is aimed at, the evaporation does not result from heating the liquid to its boiling point (which cannot be easily controlled). Using the treatment vessel according to the invention, the liquid is evaporated at a temperature below the boiling point of the liquid. If desired, the evaporated liquid may of course be further heated to a temperature far above the boiling point.

According to the present invention it is preferred that the conditioning element comprises material having a contact angle < 90°. This provides for a good wettability of the conditioning element and therefore results in an effective retention of liquid until it is suitably conditioned.

According to a preferred embodiment of the vessel according to the present invention, the conditioning element is designed such that capillary force can retain unconditioned liquid in the conditioning zone. Herewith an effective and simple retention of unconditioned liquid can be obtained. According to the present invention, the capillary force may for instance be obtained by using a packed bed of solid grains having a high wettability, especially in cases that the affinity of the liquid to the solid grains is high. Alternatively a packed bed of open porous grains (e.g. porous alumina or silica) may be used. Also a structured woven material (e.g. cloth, felt, glass braid) or a fibrous material may be used. A suitable glass braid material is supplied by Merrem ODS B.V., Zaltbommel, The Netherlands, product nrs. 09020100 and 09020050.

It is preferred according to the present invention that the conditioning element comprises an open porous material, in particular having a heterogeneous pore distribution, such that the liquid to be fed to the treatment zone can be retained in the conditioning element when in liquid phase and can pass when evaporated.

Herewith, the smaller pores of the porous material provide for the capillary force to retain unconditioned liquid in the conditioning zone while the evaporated liquid, in the form of vapour or gas, can pass through the bigger pores of the porous material. The person skilled in the art will understand that no general magnitudes for the pores can be given. The smaller pores of the porous material should therefore be small enough to generate sufficient capillary rising to keep the liquid in its place and to moderate its uncontrolled motion. As water has a higher surface tension than acetone, the respective pores have to be smaller for acetone than for water. For example, for water a pore size < 0,1 mm and for acetone a pore size of < 0,03 mm may be used. If a porous material having a heterogeneous pore distribution is used, it is preferred that the bigger pores are at least two times as big as the smaller pores.

According to a further preferred embodiment, the pore distribution in the porous material of the conditioning element is such that "Haines jumps" of liquid in the conditioning element can be prevented.

This means that in the porous material of the conditioning element there should be preferably no large segments present that contain only relative large pores resulting in a blocking of gas or vapour flow through the vessel.

Alternatively, no "Haines jumps", and accompanying blocking of the flow of gas and/or vapour, will occur if an interconnected zone of small pores is present in the porous material that runs all the way from the begin portion (i.e. where the liquid enters the conditioning zone) of the conditioning element to the end portion of the conditioning element.

According to an alternative embodiment of the reaction vessel, the conditioning zone comprises the conditioning element and one or more through going channels. Herewith it can be ensured that the liquid to be fed to the treatment zone can be retained in the porous material of the conditioning element when in liquid phase and can be passed via the one or more through going channel when evaporated. If a gas stream is also fed to the treatment zone, said gas will flow substantially through the through going channels.

This provides for an alternative way of keeping unconditioned liquid in the conditioning element. In this respect it is noticed that the one or more through going channels are present in addition to optional channels present in the conditioning element itself (e.g. in the porous material).

Advantageously the conditioning element comprises open porous material which is coated on at least a part of the inside wall of the reaction vessel.

Herewith a very efficient and simple retention of unconditioned liquid can be achieved, while conditioned liquid in vapour or gas form can pass the conditioning zone. The porous material may have a homogeneous or heterogeneous pore distribution, as long as a sufficient retention of the unconditioned liquid is secured.

Also, the conditioning element may comprise a coil or other suitable insert such that liquid will tend to follow the coil, or other suitable insert, because of the high surface tensions, while gas or vapour will flow along. The person skilled in the art will understand that the coil may be of any suitable material providing for a sufficient retention of the unconditioned liquid.

Further, it is preferred that the conditioning zone comprises heating means for providing a temperature gradient over the conditioning zone. Herewith a smooth conditioning of the liquid can be secured.

In a further aspect the present invention provides a reactor assembly comprising a treatment vessel according to the invention.

Furthermore the present invention in a further aspect thereof provides a conditioning element as described in connection with the treatment vessel.

According to a further aspect, the present invention provides for the use of the treatment vessel, the reactor assembly and/or the conditioning element in high throughput experimentation (HTE).

HTE aims, amongst others, to determine the optimal process conditions for producing a substance and involves conducting a large number of experiments, with different reaction conditions, in parallel. These reactions often involve small amounts of liquid feeds, which may be part of a gas-liquid stream. These liquids need to be heated gradually for smooth evaporation to occur but they have been, in known reactor vessels, entrained with the gas stream and moved into the high temperature reaction region too quickly.

Finally, the present invention relates to a method of feeding a liquid to a treatment zone, wherein the liquid is firstly fed to a conditioning zone, the liquid is conditioned in said conditioning zone to a selected temperature, whereupon conditioned liquid is allowed to be fed to the treatment zone, while unconditioned liquid is prevented from being fed to the treatment zone until suitable conditioning of the liquid has taken place.

In this application "suitable conditioning" means conditioning, such as heating, to the desired temperature. The desired temperature may be a certain temperature required for a reaction to occur in the treatment zone or, in most cases, above the equilibrium point of the vapour pressure and gas pressure of the liquid fed.

Hereinafter, the present invention will be illustrated in more detail by a drawing. Herein shows:
fig. 1 a schematic cross-sectional view of the treatment vessel according to the present invention; and
figs. 2A, 2B and 2C schematic magnified cross-sectional views of three alternative conditioning zones for the treatment vessel shown in fig. 1.

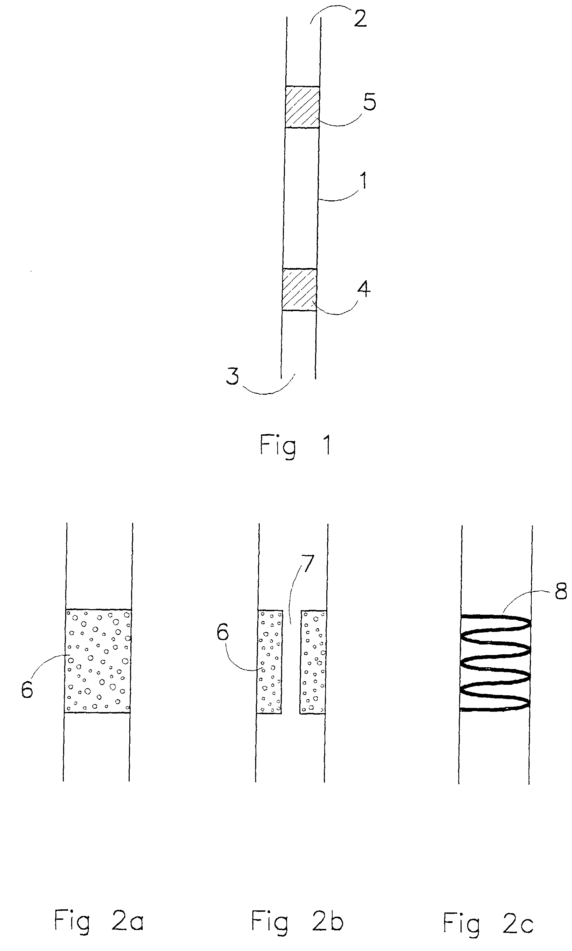

Fig. 1 shows a schematic cross-sectional view of a treatment vessel 1 according to the present invention. The vessel 1 comprises an inlet 2 and outlet 3, a treatment zone 4, such as a reaction zone comprising a catalyst, between the inlet 2 and outlet 3, and a liquid conditioning zone 5 between the inlet 2 and the treatment zone 4. The liquid conditioning zone 5 comprises a conditioning element (see fig. 2) for conditioning liquid to a selected temperature, e.g. a certain temperature required for a certain reaction to occur, or such that the liquid is evaporated. In most cases, conditioning of the liquid will result in evaporation of that liquid, i.e. the vapour pressure will be at least equilibrated with the gas pressure. The conditioning element is designed such that it can retain substantially all unconditioned liquid fed to the conditioning zone 5 until conditioned (e.g. evaporated), while conditioned liquid is allowed to pass the conditioning zone 5 to enter the treatment zone 4. The person skilled in the art will understand that the conditioning element of the conditioning zone 5 may have a variety of forms, and may be made from a broad range of materials. The person skilled in the art will choose the appropriate form and materials depending on the liquid to be fed, and further conditions which differ from case to case. For instance, the conditioning zone may comprise two substantially parallel faces which allow a film to be formed in between.

Alternatively, the conditioning element may be made from a structured woven material such as cloth, felt, glass braid, etc., wherein the material is put in the conditioning zone 5 of the treatment vessel 1 as a hose with one channel in alignment with the vessel 1 for passing conditioned liquid.

Furthermore, the person skilled in the art will understand that the inlet 2 of the vessel 1 may be constructed such as to provide smooth feeding of liquid to the conditioning zone 5. This may be achieved, for instance, by inserting a capillary, thread or tube into the inlet 2 of the vessel 1, and thus by bringing the liquid into direct contact with the conditioning zone 5.

Figs. 2A, 2B and 2C show three preferred alternative embodiments of the conditioning element 6 forming part of the conditioning zone 5 of the vessel 1 in fig. 1.

In fig. 2A the conditioning element 6 comprises an open porous material having a heterogeneous pore distribution, such that the liquid to be fed to the treatment zone 4 can be retained in the small pores of the conditioning element 6 when in liquid phase, while gases and vapours can pass through the large pores. Preferably the pore distribution in the porous material of the conditioning element 6 is such that blockages and Haines jumps of liquid in the conditioning element 5 can be prevented.

Fig. 2B shows an alternative preferred embodiment of the conditioning element 6 forming part of the conditioning zone 5 of the reaction vessel 1. In this case, the wall of the reaction vessel 1 is lined with a porous material, such as ceramic cloth, that acts as a wick and controls the liquid travel trough the conditioning zone 5. The porous material of the conditioning element may be homogeneous or heterogeneous. A through going channel 7 is provided for passing the conditioned liquid, and optionally present gaseous reagents.

Fig. 2C shows another alternative preferred embodiment of the conditioning element 6 of the conditioning zone 5. In this embodiment the conditioning element 6 comprises a coil 8. Instead of the coil 8 any other suitable insert may be used. The coil 8, or other suitable insert may be composed of a porous material, or of a non-porous material having a high affinity for the liquid to be fed. The contact between the coil 8, or other suitable insert, and the wall of the vessel should be such that liquid can be sufficiently retained between the coil 8 and the wall.

In general, the material used in the conditioning element 6 of figs. 2A, 2B and 2C should have some affinity to the liquid fed. Preferably the material should have a contact angle of less than 90° to ensure that the material is easily wetted by the liquid. If a heterogeneous material is used, it is preferred that the relatively larger pores do not have a pore size exceeding twice the average of the pore size of all the pores.

The person skilled in the art will understand that, in addition to the embodiments shown in fig. 2A-2C, any other suitable embodiment of the conditioning element 6 may be used, for example a grid or rough wall.

In use of the vessel 1 as shown in fig. 1, a liquid feed, which may be part of a gas-liquid stream, will be fed in the inlet 2. When entering the conditioning zone 5, the gas or vapour part of the stream, or the suitably conditioned liquid, will pass the conditioning zone 5 comprising the conditioning element 6 and enter the treatment zone 4. Advantageously the conditioning zone 5 is in direct contact with the treatment zone 4 as is the case in trickle flow. The unconditioned liquid part of the stream will be conditioned in the conditioning zone 5 to a selected temperature. To this end heating means may be provided in the conditioning zone 5, or the wall of the reaction vessel 1 may act as such. After conditioning of the liquid to a selected temperature, or after evaporation of the liquid the conditioned stream will pass the conditioning zone 5 and enter the treatment zone 4.

The treatment vessel according to the present invention provides, as is illustrated in the Example, for a gradually heating of liquid feeds, wherein, if appropriate, smooth evaporation may occur, in a controlled manner.

### Example

A stainless steel tube (30 cm, internal diameter 2 mm) was filled with a glass braid of about 20 cm (internal diameter 1,0 mm; supplied by Merrem CDS B.V., Zaltbommel, The Netherlands, product nr. 09020100). The tube was supplied with a gas flow (10 ml/min) of helium (300°C). Using a capillary, 2 µl/min water (25°C) was dripped on the glass braid. The glass braid in the tube provided for a smooth evaporation of the water, wherein no unconditioned liquid was entrained in the gas flow. Downstream of the glass braid the physical conditions could be maintained substantially uniform during the feeding of liquid.

Using the treatment vessel according to the present invention, substantially no unconditioned liquid will be entrained in the gas flow entering the treatment zone. Also no droplets will be formed due to surface tension effects which are difficult to heat. Therefore, the vessel allows improved controlling of the conditions in the treatment zone.

## Claims

1. Treatment vessel (1) comprising an inlet (2) and outlet (3), a treatment zone (4) between the inlet (2) and the outlet (3), and a liquid conditioning zone (5) between the inlet (2) and the treatment zone (4), wherein the liquid conditioning zone (5) comprises a conditioning element (6) for conditioning the liquid to a selected temperature, and wherein the conditioning element (6) can retain substantially all unconditioned liquid fed to the conditioning zone (5) until conditioned, while conditioned liquid is allowed to pass.

2. Vessel according to claim 1, wherein the conditioning element (6) comprises material having a contact angle < 90°.

3. Vessel according to claim 1 or 2, wherein the conditioning element (6) is designed such that capillary force can retain unconditioned liquid in the conditioning zone (5).

4. Vessel according to claim 3, wherein the conditioning element (6) comprises an open porous material.

5. Vessel according to claim 4, wherein the porous material has a heterogeneous pore distribution.

6. Vessel according to any of the preceding claims, wherein the conditioning zone (5) comprises the conditioning element (6) and one or more through going channels (7).

7. Vessel according to claim 6, wherein the conditioning element (6) comprises an open porous material which is coated on at least a part of the inside wall of the reaction vessel (1).

8. Vessel according to claim 6, wherein the conditioning element (6) comprises a coil (8).

9. Vessel according to any of the preceding claims, wherein the conditioning zone comprises heating means for providing a temperature gradient over the conditioning zone.

10. Reactor assembly comprising a treatment vessel (1) according to one or more of the preceding claims.

11. Conditioning element (6) as described in one or more of the preceding claims 1-9.

12. Use of the treatment vessel (1) according to one or more of the preceding claims 1-9, the reactor assembly according to claim 10 or the conditioning element according to claim 11 in high throughput experimentation.

13. Method of feeding a liquid to a treatment zone (4), wherein the liquid is firstly fed to a conditioning zone (5), the liquid is conditioned in said conditioning zone (5) to a selected temperature, whereupon conditioned liquid is allowed to be fed to the treatment zone (4), while unconditioned liquid is prevented from being fed to the treatment zone (4) until suitable conditioning of the liquid has taken place.
